# EUROPÄISCHE PATENTSCHRIFT

(11) **EP 1 634 360 B1**
(45) Veröffentlichungstag und Bekanntmachung des Hinweises auf die Patenterteilung: **02.02.2011**
(21) Anmeldenummer: 04731003.2
(22) Anmeldetag: 04.05.2004
(51) Int. Cl.: H02K 11/04

(54) **Propulsionsantrieb eines Unterseeschiffes**
Propulsion drive of a submarine
Machine électrique de propulsion d'un sous-marin

(30) Priorität: 17.06.2003 DE 10327292
(43) Veröffentlichungstag der Anmeldung: 15.03.2006
(73) Patentinhaber: SIEMENS AKTIENGESELLSCHAFT, 80333 München (DE)
(72) Erfinder: MEYER, Christian, 13591 Berlin (DE)
(86) Internationale Anmeldenummer: PCT/EP2004/004739
(87) Internationale Veröffentlichungsnummer: WO 2004/112220

(56) Entgegenhaltungen:
- EP-A- 0 194 433
- WO-A-02/084843
- BOENNING H ET AL: "DER MEP-MOTOR, EIN PERMANENTERREGTER FAHRMOTOR FUER DEN SCHIFFSBETRIEB. THE MEP MOTOR WITH PERMANENTMAGNET EXCITATION FOR SHIP PROPULSION" JAHRBUCH DER SCHIFFBAUTECHNISCHEN GESELLSCHAFT, BERLIN, DE, Bd. 81, 1987, Seiten 229-234, XP002043269 ISSN: 0374-1222

## Beschreibung

Die Erfindung betrifft einen Propulsionsantrieb eines Unterwasserschiffes gemäß Oberbegriff des Patentanspruchs 1; eine derartige Vorrichtung ist durch die EP 0 194 433 B1 bekannt.

Elektrische Maschinen gemäß der vorgenannten EP 0 194 433 B1 kommen zunehmend in Antriebseinrichtungen von Unterwasserschiffen zum Einsatz, da die Unterbringung von zumindest Teilen von Antriebskomponenten (z.B. Stromrichter oder Kommutatoren) der Maschine in einer Läuferglocke, d.h. einem zwischen Läufernabe und Läuferwelle ausgebildeten zwischenraum, mit einer erheblichen Reduzierung des erforderlichen Platzbedarfs für die Maschine und deren Antriebskomponenten einhergeht, woraus sich schiffsbauseitig erhebliche Kosteneinsparungen ergeben können.

Um die Leistung solcher Maschinen zu erhöhen, können zum einen die in der Läuferglocke untergebrachten Antriebskomponenten für eine höhere Leistung ausgelegt werden. Diese ist jedoch unter Umständen mit eine Neuentwicklung dieser Antriebskomponenten und dadurch mit einem beträchtlichen finanziellen Aufwand verbunden. Eine zweite Möglichkeit ist, die bisherigen Antriebskomponenten zu verwenden und in ihrer Anzahl zu erhöhen. Für die Unterbringung dieser vergrößerten Anzahl von Antriebskomponenten in der Läuferglocke wird jedoch ein entsprechend größerer Durchmesser der Läuferglocke benötigt. Dies hat einen bezüglich der Drehachse des Läufers entsprechenden größeren Durchmesser der elektrischen Maschine zur Folge, der allerdings aufgrund des damit verbundenen erhöhten Platzbedarfes häufig nicht gewünscht ist. Dies gilt vor allem für Unter- und Überwasserschiffe.

Aus dem Aufsatz "Der MEP-Motor, ein permanenterregter Fahrmotor für den Schiffsbetrieb" von Bönning H. et al., Jahrbuchder Schiffbautechnischen Gesellschaft 81 (1987), seiten 229 bis 234, XP 002043269, ist eine elektrische Maschine mit zwei Zwischenräumen bekannt, wobei die Antriebskomponenten axial außerhalb dieser Zwischenräume untergebracht sind.

Der Erfindung liegt deshalb die Aufgabe zugrunde, einen Propulsionsantrieb der vorgenannten Art derart weiterzubilden, dass die Leistung des Antriebs bei bezüglich der Läuferwelle gleichbleibendem Durchmesser des Antriebs bedeutend gesteigert werden kann.

Diese Aufgabe wird erfindungsgemäß durch die Lehre des Patentanspruchs 1 gelöst. Vorteilhafte Ausgestaltungen der Erfindung sind jeweils Gegenstand der Unteransprüche.

Durch die erfindungsgemäße Ausbildung jeweils eines Zwischenraumes zu beiden Seiten des ersten Teilstückes wird im Vergleich zur bekannten Maschine der für die Unterbringung von Antriebskomponenten bereitstehende Zwischenraum verdoppelt. Somit können die doppelte Anzahl von Antriebskomponenten zwischen Läufernabe und Läuferwelle untergebracht werden, wobei der Durchmesser der Läufernabe und damit der elektrischen Maschine gleich bleibt. Die Leistungssteigerung der Maschine kann dann durch im Läufer und/oder Ständer angeordnete, in Richtung der Drehachse längere Aktivteile (z.B. größere Anzahl von Wicklungen oder Permanentmagnete) erzielt werden, die jedoch nicht zu einer wesentlichen Vergrößerung des Durchmessers der Maschine beitragen.

In einer konstruktiv besonders einfachen Ausgestaltung der Erfindung ist die Läufernabe T-förmig ausgebildet, so dass zu beiden Seiten der Läufernabe in etwa gleich große Zwischenräume ausgebildet sind, und somit eine symmetrische Anordnung der Antriebskomponenten in der Maschine möglich ist.

Eine weitergehende Vereinfachung der Konstruktion ist dadurch möglich, dass das erste Teilstück als Kreisscheibe ausgebildet. Zur Verbesserung der Luftzirkulation in der Maschine weist die Kreisscheibe bevorzugt im Wesentlichen parallel zu der Drehachse verlaufende Durchgangslöcher auf, so dass ein Luftaustausch zwischen den zu beiden Seiten des ersten Teilstückes bzw. der Kreisscheibe angeordneten Zwischenräumen und somit eine gute Kühlung der Maschine möglich ist.

Gemäß einer weiteren vorteilhaften Ausgestaltung der Erfindung ist das erste Teilstück als radial zur der Drehachse verlaufender Speichenkranz und das zweite Teilstück als damit verbundene Felge ausgebildet. Hierdurch kann das Gewicht des ersten Teilstückes vermindert und somit der Maschine verkleinert werden. Durch Zwischenräume zwischen den Speichen ist ein besonders guter Luftaustausch zwischen den zu beiden Seiten des Speichenkranzes angeordneten Zwischenräumen und somit eine gute Luftzirkulation und eine gute Kühlung der Maschine möglich.

Die Läufernabe ist zwischen einem A-seitigen Lagerschild und einem B-seitigen Lagerschild an der Läuferwelle befestigt. Für einen symmetrischen Aufbau der Maschine mit gleich großen Zwischenräumen zu beiden Seiten des ersten Teilstückes ist die Läufernabe vorzugsweise im wesentlichen mittig zwischen dem A-seitigen Lagerschild und dem B-seitigen Lagerschild an der Läuferwelle befestigt.

Die Halterung der Antriebskomponenten kann auf konstruktiv einfache Weise dadurch erfolgen, dass die außerhalb der Zwischenräume verbleibenden Enden der Antriebskomponenten an dem Ständer, einem Ständergehäuse oder dem A- oder B-seitigen Lagerschild abgestützt sind. Zusätzlich oder alternativ kann die Halterung der Antriebskomponenten dadurch erfolgen, dass der Ständer ein, vorzugsweise um die Läuferwelle drehbares, Ständerjoch mit einer Haltevorrichtung für die Antriebskomponenten aufweist.

Gemäß einer vorteilhaften Ausgestaltung der Erfindung weist ein sich zwischen einem A-seitigen Lager und der Läufernabe erstreckender erster Abschnitt der Läuferwelle eine für die Drehmomentenübertragung und das durch die Läufernabe und den Läufer verursachte Biegemoment ausreichende Stärke auf.

Ein sich zwischen einem B-seitigen Lager und der Läufernabe erstreckender zweiter Abschnitt der Läuferwelle weist, da er nicht für die Drehmomentenübertragung verwendet wird, zweckmäßigerweise nur eine für das durch die Läufernabe und den Läufer verursachte Biegemoment ausreichende Stärke. Hierdurch kann der in dem zwischen dem zweiten Abschnitt der Läuferwelle und der Läufernabe ausgebildeter Zwischenraum vergrößert werden, so dass zusätzlicher Platz für die Unterbringung von Antriebskomponenten zur Verfügung steht.

Aufgrund ihres geringen Raumbedarfes bei gleichzeitig hoher Leistung eignet sich die erfindungsgemäße elektrische Maschine besonders für die Verwendung in Über- und Unterwasserschiffen, und hierbei insbesondere für den Propulsionsantrieb von Unterwasserschiffen.

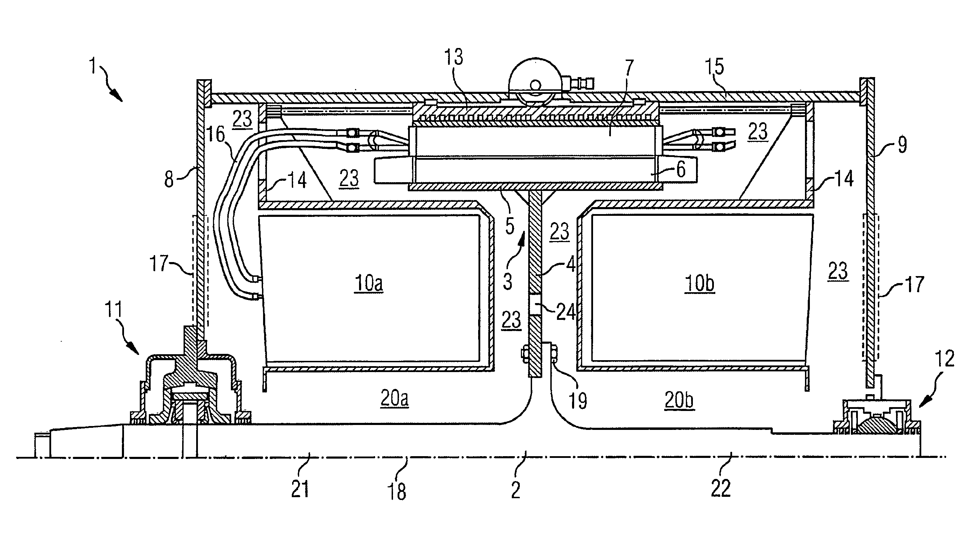

Die Erfindung sowie weitere vorteilhafte Ausgestaltungen der Erfindung gemäß Merkmalen der Unteransprüche werden im folgenden anhand eines schematisch ausgeführten Ausführungsbeispieles in der Figur näher erläutert.

Die Figur zeigt in vereinfachter Darstellung im Teillängsschnittes eine elektrische Maschine 1, die eine um eine Drehachse 18 drehbare Läuferwelle 2, eine mit Hilfe von Schraubbolzen 19 drehfest mit der Läuferwelle 2 verbundene Läufernabe 3, einen auf der Läufernabe 3 sitzenden Läufer 6 und einen Ständer 7 mit einem Ständerjoch 13 aufweist. Diese Komponenten sind in einem Maschinengehäuse untergebracht, das aus einem Ständergehäuse 15, einem A-seitigen Lagerschild 8 und einem B-seitigen Lagerschild 9 besteht.

Die Läufernabe 3 ist T-förmig ausgebildet und weist ein erstes Teilstück 4 und ein mit dem ersten Teilstück drehfest verbundenes zweites Teilstück 5 auf, wobei das erste Teilstück 4 im Wesentlichen radial zur Drehachse 18 verläuft und sich das zweite Teilstück im wesentlichen parallel zu der Drehachse 18 zu beiden Seiten des ersten Teilstückes erstreckt. Das erste Teilstück 4 ist als Kreisscheibe ausgebildet, während das zweite Teilstück 5 die Läuferwelle 2 ringförmig bzw. in koaxialer Anordnung umgibt.

Durch die Läuferwelle 2, das erste Teilstück 4 und das zweite Teilstück 5 ist zu beiden Seiten des ersten Teilstücks 4 jeweils ein Zwischenraum 20a bzw. 20b ausgebildet. Der sich in Richtung des A-seitigen Lagerschildes 8 erstreckende Zwischenraum ist in der Figur mit 20a, der sich in Richtung des B-seitigen Lagerschildes 9 erstreckende Zwischenraum ist in der Figur mit 20b bezeichnet. Im Inneren des Gehäuses der elektrischen Maschine 1 befinden sich Antriebskomponenten 10a bzw. 10b wie z.B. Stromrichter, die derart angeordnet sind, dass sie in die Zwischenräume 20a bzw. 20b hineinragen bzw. darin untergebracht sind.

Die Antriebskomponenten 10a,10b speisen über Kabelverbindungen 16 die Ständerwicklungen des Ständers 7 (nur teilweise dargestellt) und werden von einem Haltegerüst 14 gehalten, welches wiederum mit dem Ständerjoch 13 des Ständers 7 verbunden sind. Die Antriebskomponenten 10a, 10b und das diese Antriebskomponenten haltende Haltegerüst 14 sind hierbei so im Inneren der Maschine angeordnet, dass Zwischenräume 23 zwischen Ständergehäuse 15, Ständer 7, Läufernabe 3, Welle 2, A-seitigem Lagerschild 8 und B-seitigem Lagerschild 9 für innere Kühlluftwege verbleiben, so dass die Kühlung der elektrischem Maschine 1 gewährleistet ist.

Die Läuferwelle 2 ist im A-seitigen Lagerschild 8 durch ein für die Drehmomentenübertragung ausgelegtes Lager 11 gelagert. Da die Läuferwelle 2 im B-seitigen Lagerschild 9 nicht zur Drehmomentenübertragung benötigt wird, ist sie zweckmäßigerweise nur durch ein relativ kleines Stützlager 12 gelagert.

Die Läufernabe 3 ist im wesentlichen mittig zwischen dem A-seitigen Lagerschild 8 und dem B-seitigen Lagerschild 9 an der Läuferwelle 2 befestigt. Ein sich zwischen dem A-seitigen Lager 11 und der Läufernabe 3 erstreckender erster Abschnitt 21 der Läuferwelle 2 weist eine für die Drehmomentenübertragung und das durch die Läufernabe 3 und den Läufer 6 verursachte Biegemoment ausreichende Stärkemoment auf. Ein sich zwischen dem B-seitigen Lager 12 und der Läufernabe 3 erstreckender zweiter Abschnitt 22 der Läuferwelle 2 wird nur durch das durch die Läufernabe 3 und den Läufer 6 verursachte Biegemoment beansprucht und muss deshalb nur eine für dieses Biegemoment ausreichende Stärke aufweisen.

Die Antriebskomponenten 10a,10b umgeben ringförmig die Läuferwelle 2 und sind deshalb vorteilhafterweise in einzelne Ringsegmente unterteilt. Sie können durch in dem A-seitigen Lagerschild 8 oder dem B-seitigen Lagerschild 9 vorgesehene Durchlässe 17 ausgewechselt werden und/oder sind von außen über diese Durchlässe für Wartungs- und Reparaturtätigkeiten zugreifbar. Das Ständerjoch 13 ist hierzu vorteilhafterweise um die Drehachse 18 drehbar ausgeführt und erlaubt somit eine Drehung der Haltevorrichtung 14 sowie der darin gehaltenen Antriebskomponenten 10a, 10b, so dass Antriebskomponenten, die sich nicht in Bereich eines Durchlasses 17 befinden, zum Austausch bzw. für Wartungs- oder Reparatureingriffe zu einem der Durchlässe 17 gedreht werden können. Die Durchlässe 17 können z.B. durch aus dem jeweiligen Lagerschild herausnehmbare Lagerschildteile gebildet sein. Zusätzlich kann auch der ringförmig den Läufer 6 umgebende Ständer 7 in einzelne Ringsegmente unterteilt sein. Über (nicht dargestellte) weitere Durchlässe in dem A-seitigen Lagerschild 8 und dem B-seitigen Lagerschild 9 können die Ständer-Ringsegemente ausgewechselt werden und/oder sind von außen über diese Durchlässe für Wartungs- und Reparaturtätigkeiten zugreifbar. Vorteilhafterweise ist deshalb auch der Ständer 7 bezüglich der Drehachse 18 verdrehbar in dem Ständergehäuse 15 gelagert.

In nicht näher dargestellter Weise kann die gesamte Maschine 1 schwingungsgedämpft gelagert sein. Durch eine Aufstellung der gesamten Maschine 1 auf Schockdämpfer können auch Schockbelastungen auf die Maschine 1 uf ein erträgliches Maß reduziert werden. Die Maschine 1 kann hierbei über eine mit dem A-seitigen Ende der Läuferwelle 2 verbundene elastische Kupplung mit einer angetriebenen bzw. antreibenden Einheit verbunden werden.

Durch die Unterbringung der Antriebskomponenten im Inneren der Maschine wird eine besonders wirksame Abschirmung der E-nergieabstrahlung akustischer und elektrischer Art nach außen erreicht. Vorteilhafterweise ist die elektrische Maschine 1 als permanentmagnetisch erregte Synchronmaschine ausgebildet.

Aufgrund der hohen elektrischen Leistung bei geringem Platzbedarf, der besonders wirksamen elektrischen und akustischen Abschirmung sowie der mit einfachen Mitteln realisierbaren Stoßfestigkeit eignet sich die elektrische Maschine 1 besonders vorteilhaft als Propulsionsantrieb für ein Unterwasserschiff.

## Patentansprüche

1. Propulsionsantrieb eines Unterwasserschiffes mit einerelektrischen Maschine (1) mit einem Ständer (7), einer um eine Drehachse (18) drehbaren Läuferwelle (2) und einer einen Läufer (6) tragenden, drehfest auf der Läuferwelle (2) befestigten Läufernabe (3), wobei zwischen der Läufernabe (3) und der Läuferwelle (2) ein Zwischenraum (20a bzw. 20b) ausgebildet ist, in den Teile von Antriebskomponenten (10a bzw. 10b) ragen oder darin untergebracht sind, die ringförmig die Läuferwelle (2) umgeben,
**dadurch gekennzeichnet, dass** die Läufernabe (3) ein erstes Teilstück (4) und ein zweites Teilstück (5) aufweist, wobei
- das erste Teilstück (4) im Wesentlichen radial zu der Drehachse (18) verläuft und sich das zweite Teilstück (5) im Wesentlichen parallel zu der Drehachse (18) zu beiden Seiten des ersten Teilstückes (4) erstreckt, und wobei
- durch die Läuferwelle (2), das erste Teilstück (4) und das zweite Teilstück (5) zu beiden Seiten des ersten Teilstückes (4) jeweils ein Zwischenraum (20 a bzw. 20b) ausgebildet ist, in den Teile von Antriebskomponenten (10a bzw. 10b) ragen oder darin untergebracht sind,
wobei
- die in die Zwischenräume (20a, 20b) ragenden Antriebskomponenten (10a, 10b) Stromrichter sind, die über Kabelverbindungen (16) die Ständerwicklungen des Ständers (7) speisen
- die Läufernabe (3), vorzugsweise im Wesentlichen mittig, zwischen einem A-seitigen Lagerschild (8) und einem B-seitigen Lagerschild (9) an der Läuferwelle (2) befestigt ist und
- die Stromrichter durch in dem A-seitigen Lagerschild (8) oder dem B-seitigen Lagerschild (9) vorgesehene Durchlässe (17) auswechselbar und/oder zugreifbar sind.

2. Propulsionsantrieb nach Anspruch 1,
**dadurch gekennzeichnet, dass** die Läufernabe (3) T-förmig ausgebildet ist.

3. Propulsionsantrieb nach einem der vorhergehenden Ansprüche, **dadurch gekennzeichnet, dass** das erste Teilstück (4) als Kreisscheibe ausgebildet ist

4. Propulsionsantrieb nach Anspruch 3,
**dadurch gekennzeichnet, dass** die Kreisscheibe im Wesentlichen parallel zu der Drehachse (18) verlaufende Durchgangslöcher (24) aufweist.

5. Propulsionsantrieb nach Anspruch 1 oder 2,
**dadurch gekennzeichnet, dass** das erste Teilstück (4) als radial zur der Drehachse (18) verlaufender Speichenkranz und das zweite Teilstück (5) als Felge ausgebildet ist.

6. Propulsionsantrieb nach einem der vorhergehenden Ansprüche, **dadurch gekennzeichnet, dass** die außerhalb der Zwischenräume (20a, 20b) verbleibenden Enden der Antriebskomponenten (10a, 10b) an dem Ständer (7), einem Ständergehäuse (15) oder dem A- oder dem B-seitigen Lagerschild (8, 9) abgestützt sind.

7. Propulsionsantrieb nach einem der vorhergehenden Ansprüche, **dadurch gekennzeichnet, dass** der Ständer (7) ein, vorzugsweise um die Drehachse (18) drehbares, Ständerjoch (13) mit einer Haltevorrichtung (14) für die Antriebeskomponenten (10a, 10b) aufweist.

8. Propulsionsantrieb nach einem der vorhergehenden Ansprüche, **dadurch gekennzeichnet, dass** ein sich zwischen einem A-seitigen Lager (11) und der Läufernabe (3) erstreckender erster Abschnitt (21) der Läuferwelle (2) eine für die Drehmomentenübertragung und das durch die Läufernabe (3) und den Läufer (6) verursachte Biegemoment ausreichende Stärke aufweist.

9. Propulsionsantrieb nach einem der vorhergehenden Ansprüche, **dadurch gekennzeichnet, dass** ein sich zwischen einem B-seitigen Lager (12) und der Läufernabe (3) erstreckender zweiter Abschnitt (22) der Läuferwelle (2) eine für das durch die Läufernabe (3) und den Läufer (6) verursachte Biegemoment ausreichende Stärke aufweist.

10. Propulsionsantrieb nach Anspruch 9,
**dadurch gekennzeichnet, dass** das B-seitige Lager (12) als ein Stützlager (12) ausgebildet ist.

11. Propulsionsantrieb nach einem der vorhergehenden Ansprüche, **gekennzeichnet durch** eine schwingungsgedämpfte Lagerung der Maschine (1).

12. Propulsionsantrieb nach einem der vorhergehenden Ansprüche, **dadurch gekennzeichnet, dass** das A-seitige Ende der Läufwelle (2) mit einer elastischen Kupplung verbunden ist.

13. Propulsionsantrieb nach einem der vorhergehenden Ansprüche, **gekennzeichnet durch** eine Ausbildung als läuferseitig permanentmagnetisch erregte Synchronmaschine.

## Claims

1. Propulsion drive for a submarine having an electrical machine (1) with a stator (7), having a rotor shaft (2) which can rotate about a rotation axis (18) and having a rotor hub (3) which is fitted with a rotor (6) and is mounted on the rotor shaft (2) such that they rotate together, wherein an intermediate space (20a or 20b) is formed between the rotor hub (3) and the rotor shaft (2), into which parts of drive components (10a and 10b) project or are accommodated therein, which parts surround the rotor shaft (2) in an annular shape, **characterized in that** the rotor hub (3) has a first subelement (4) and a second subelement (5),
wherein
- the first subelement (4) runs substantially radially with respect to the rotation axis (18), and the second subelement (5) extends substantially parallel to the rotation axis (18) on both sides of the first subelement (4), and wherein
- an intermediate space (20a or 20b) is in each case formed by the rotor shaft (2), the first subelement (4) and the second subelement (5) on both sides of the first subelement (4), into which intermediate space (20a or 20b) parts of drive components (10a and 10b) project or are accommodated therein,
wherein
- the drive components (10a, 10b) which project into the intermediate spaces (20a, 20b) are converters which feed the stator windings of the stator (7) via cable connections (16),
- the rotor hub (3) is attached to the rotor shaft (2), preferably substantially centrally, between a drive-end bearing shield (8) and a non-drive-end bearing shield (9), and
- the converters can be replaced and/or accessed through apertures (17) which are provided in the drive-end bearing shield (8) or in the non-drive-end bearing shield (9).

2. Propulsion drive according to Claim 1, **characterized in that** the rotor hub (3) is T-shaped.

3. Propulsion drive according to one of the preceding claims, **characterized in that** the first subelement (4) is in the form of a circular disc.

4. Propulsion drive according to Claim 3, **characterized in that** the circular disc has aperture holes (24) which run substantially parallel to the rotation axis (18).

5. Propulsion drive according to Claim 1 or 2, **characterized in that** the first subelement (4) is in the form of a spoked ring which runs radially with respect to the rotation axis (18) and the second subelement (5) is in the form of a rim.

6. Propulsion drive according to one of the preceding claims, **characterized in that** those ends of the drive components (10a, 10b) which remain outside the intermediate spaces (20a, 20b) are supported on the stator (7), a stator housing (15) or the drive-end or non-drive-end bearing shield (8, 9).

7. Propulsion drive according to one of the preceding claims, **characterized in that** the stator (7) has a stator yoke (13), which can preferably rotate about the rotation axis (18) and has a holding apparatus (14) for the drive components (10a, 10b).

8. Propulsion drive according to one of the preceding claims, **characterized in that** a first section (21) of the rotor shaft (2), which extends between a drive-end bearing (11) and the rotor hub (3), is strong enough to transmit torque and the bending moment caused by the rotor hub (3) and the rotor (6).

9. Propulsion drive according to one of the preceding claims, **characterized in that** a second section (22) of the rotor shaft (2), which extends between a non-drive-end bearing (12) and the rotor hub (3), is strong enough for the bending moment caused by the rotor hub (3) and the rotor (6).

10. Propulsion drive according to Claim 9, **characterized in that** the non-drive-end bearing (12) is in the form of a supporting bearing (12).

11. Propulsion drive according to one of the preceding claims, **characterized by** the machine (1) having a vibration-damped bearing.

12. Propulsion drive according to one of the preceding claims, **characterized in that** the drive-end of the rotor shaft (2) is connected to an elastic coupling.

13. Propulsion drive according to one of the preceding claims, **characterized by** the propulsion drive being in the form of a synchronous machine with permanent-magnet excitation on the rotor side.

## Revendications

1. Entraînement de propulsion d'un sous-marin, comprenant une machine ( 1 ) électrique ayant un stator ( 7 ), un arbre ( 2 ) de rotor tournant autour d'un axe ( 18 ) de rotation et un moyeu ( 3 ) de rotor portant un rotor ( 6 ) et solidaire en rotation de l'arbre ( 2 ) du rotor, un espace ( 30a et 20b ) intermédiaire entre le moyeu ( 3 ) du rotor et l'arbre ( 2 ) du rotor étant formé, espace dans lequel des parties de composants ( 10a et 10b ) de l'entraînement pénètrent ou sont logées, lesquelles entourent annulairement l'arbre (2) du rotor,
**caractérisé en ce que** le moyeu (3) du rotor comporte une première pièce ( 4 ) partielle et une deuxième pièce (5) partielle, dans lequel
- la première pièce (4) partielle s'étend sensiblement radialement par rapport à l'axe ( 18 ) de rotation et la deuxième pièce (5) partielle s'étend sensiblement parallèlement à l'axe ( 18 ) de rotation des deux côtés de la première pièce ( 4 ) partielle, et dans lequel
- il est formé par l'arbre ( 2 ) du rotor, par la première pièce (4) partielle et par la deuxième pièce ( 5 ) partielle, des deux côtés de la première pièce ( 4 ) partielle, respectivement un espace ( 20a et 20b ) intermédiaire, dans lequel des parties de composants ( 10a et 10b ) d'entraînement pénètrent ou sont logées,
dans lequel
- les composants ( 10a, 10b ) d'entraînement pénétrant dans les espaces ( 20a, 20b ) intermédiaires sont des convertisseurs de courant, qui alimentent les enroulements rotoriques du stator ( 5 ) par des liaisons ( 16 ) par câble,
- le moyeu ( 3 ) du rotor est fixé à l'arbre ( 2 ) du rotor, de préférence sensiblement au milieu entre un flasque ( 8 ) de palier du côté A et un flasque ( 9 ) de palier du côté B et
- le convertisseur de courant peut être remplacé et/ou est accessible par des passages ( 17 ) prévus dans le flasque ( 8 ) de palier du côté A ou dans le flasque ( 9 ) de palier du côté B.

2. Entraînement de propulsion suivant la revendication 1, **caractérisé en ce que** le moyeu ( 3 ) du rotor est en forme de T.

3. Entraînement de propulsion suivant l'une des revendications précédentes, **caractérisé en ce que** la première pièce ( 4 ) partielle est sous la forme d'un disque circulaire.

4. Entraînement de propulsion suivant la revendication 3, **caractérisé en ce que** le disque circulaire a des trous ( 24 ) de passage s'étendant sensiblement parallèlement à l'axe ( 18 ) de rotation.

5. Entraînement de propulsion suivant la revendication 1 ou 2, **caractérisé en ce que** la première pièce ( 4 ) partielle est constituée sous la forme d'une couronne à rayon et la deuxième pièce ( 5 ) partielle sous la forme d'une jante.

6. Entraînement de propulsion suivant l'une des revendications précédentes, **caractérisé en ce que** les extrémités des composants ( 10a, 10b ) d'entraînement restant à l'extérieur des espaces ( 20a, 20b ) intermédiaires s'appuient sur le rotor ( 7 ), sur un carter ( 15 ) de rotor ou sur le flasque ( 8, 9 ) de palier du côté A ou du côté B.

7. Entraînement de propulsion suivant l'une des revendications précédentes, **caractérisé en ce que** le stator ( 7 ) a une culasse ( 13 ) de stator tournant, de préférence, autour de l'axe ( 18 ) de rotation et ayant un dispositif ( 14 ) de maintien des composants ( 10a, 10b ) d'entraînement.

8. Entraînement de propulsion suivant l'une des revendications précédentes, **caractérisé en ce qu'**un premier tronçon ( 21 ) de l'arbre ( 2 ) du rotor, qui s'étend entre un flasque ( 11 ) du côté A et le moyeu ( 3 ) du rotor, a une épaisseur suffisante pour la transmission du couple de rotation et du couple de flexion provoquée par le moyeu ( 3 ) du rotor et par le rotor ( 6 ).

9. Entraînement de propulsion suivant l'une des revendications précédentes, **caractérisé en ce qu'**un deuxième tronçon ( 22 ) de l'arbre ( 2 ) du rotor, qui s'étend entre un palier ( 12 ) du côté B et le moyeu (3) du rotor, a une épaisseur suffisante pour le couple de flexion provoquée par le moyeu ( 3 ) du rotor et par le rotor ( 6 ).

10. Entraînement de propulsion suivant la revendication 9, **caractérisé en ce que** le flasque ( 12 ) du côté B est constitué sous la forme d'un palier ( 12 ) d'appui.

11. Entraînement de propulsion suivant l'une des revendications précédentes, **caractérisé par** un montage à amortissement des vibrations de la machine ( 1 ).

12. Entraînement de propulsion suivant l'une des revendications précédentes, **caractérisé en ce que** l'extrémité du côté A de l'arbre ( 2 ) du rotor est reliée à un accouplement élastique.

13. Entraînement de propulsion suivant l'une des revendications précédentes, **caractérisé par** une constitution sous la forme d'un moteur synchrone excité par magnétisme permanent du côté du rotor.
